# EUROPÄISCHE PATENTSCHRIFT

(11) **EP 3 308 456 B1**
(45) Veröffentlichungstag und Bekanntmachung des Hinweises auf die Patenterteilung: **14.10.2020**
(21) Anmeldenummer: 15744909.1
(22) Anmeldetag: 29.07.2015
(51) Int. Cl.: H02M 7/483

(54) **MODULARER MULTILEVELUMRICHTER SOWIE TEILMODUL FÜR EINEN MULTILEVELUMRICHTER**
MODULAR MULTI-LEVEL CONVERTER AND SUB-MODULE FOR A MULTI-LEVEL CONVERTER
CHANGEUR DE FRÉQUENCES MODULAIRE À MULTIPLES NIVEAUX AINSI QUE SOUS-MODULE POUR UN CHANGEUR DE FRÉQUENCES À MULTIPLES NIVEAUX

(43) Veröffentlichungstag der Anmeldung: 18.04.2018
(73) Patentinhaber: Siemens Aktiengesellschaft, 80333 München (DE)
(72) Erfinder: HOFMANN, Viktor, 95448 Bayreuth (DE); BAKRAN, Mark-Matthias, 91052 Erlangen (DE); SCHÖN, Andre, 91058 Erlangen (DE)
(86) Internationale Anmeldenummer: PCT/EP2015/067402
(87) Internationale Veröffentlichungsnummer: WO 2017/016601

(56) Entgegenhaltungen:
- WO-A1-2011/073466
- WO-A1-2014/146721
- DE-A1-102013 218 207

## Beschreibung

Die Erfindung bezieht sich auf einen modularen Multilevelumrichter mit zumindest einer Teilmodulreihenschaltung, die mindestens zwei in Reihe geschaltete Teilmodule und eine Induktivität umfasst.

Ein modularer Multilevelumrichter dieser Art ist beispielsweise aus der Veröffentlichungsschrift "Modular Multilevel Converter: An universal concept for HVDC-Networks and extended DC-Bus-Applications" (R. Marquardt, 2010 International Power Electronics Conference, Seiten 502 bis 507, 978-1-4244-5393-1/10, 2010 IEEE) bekannt. In der Veröffentlichungsschrift sind Teilmodule offenbart, die Halb- und Vollbrücken umfassen.

Ein Multilevelumrichter mit komplexeren Teilmodulen ist aus der internationalen Veröffentlichungsschrift WO 2015/036149 A1 bekannt.

Die deutsche Offenlegungsschrift DE 10 2013 218 207 A1 offenbart einen modularen Mehrpunktstromrichter für hohe Spannungen. Dieser Mehrpunktstromrichter weist eine Reihe von Submodulen auf. Ein Submodul umfasst dabei eine erste Untereinheit, die einen ersten Energiespeicher und eine dem ersten Energiespeicher parallel geschaltete erste Reihenschaltung zweier Leistungshalbleiterschalteinheiten aufweist. Ferner umfasst das Submodul eine zweite gleichartige Untereinheit sowie Verbindungsmittel, welche die erste Untereinheit und die zweite Untereinheit miteinander verbinden.

Die internationale Patentanmeldung WO 2014/146721 A1 offenbart eine bipolare Doppel-Spannungs-Zelle und einen Multilevel-Stromrichter mit einer solchen Zelle. Die bipolare Doppel-Spannungs-Zelle weist dabei als Energiespeicher zwei Kondensatoren auf.

Aus der internationalen Patentanmeldung WO 2011/073466 A1 ist ein Stromrichter bekannt, der eine Reihenschaltung mit einer Mehrzahl an zweipoligen Modulen aufweist. Jedes Modul weist dabei mehrere Schaltelemente mit antiparallel geschalteten Dioden sowie zwei Kondensatoren auf.

Der Erfindung liegt die Aufgabe zugrunde, einen Multilevelumrichter mit verbesserten Eigenschaften anzugeben.

Diese Aufgabe wird erfindungsgemäß durch ein Teilmodul für einen Multilevelumrichter mit den Merkmalen gemäß Patentanspruch 1 gelöst. Vorteilhafte Ausgestaltungen des erfindungsgemäßen Multilevelumrichters sind in Unteransprüchen angegeben.

Danach ist erfindungsgemäß vorgesehen, dass zumindest eines der Teilmodule aufweist:
- eine Halbbrücke, die einen Eingangsanschluss des Teilmoduls bildet und einen ersten und einen zweiten Halbbrückenausgangsanschluss umfasst,
- eine Reihenschaltungseinheit, die mit einem ersten Anschluss an den ersten Halbbrückenausgangsanschluss und mit einem zweiten Anschluss an den zweiten Halbbrückenausgangsanschluss angeschlossen ist, wobei die Reihenschaltungseinheit eine erste und eine zweite Schalteinheit sowie einen Kondensator umfasst und die elektrische Verbindungsstelle zwischen den zwei Schalteinheiten der Reihenschaltungseinheit einen Ausgangsanschluss des Teilmoduls bildet, und
- eine bidirektional schaltfähige Schalteinrichtung, die Strom unabhängig von der Stromflussrichtung ein- und ausschalten kann und mit einem Anschluss an den Ausgangsanschluss des Teilmoduls und mit einem anderen Anschluss an den zweiten Halbbrückenausgangsanschluss und damit an den zweiten Anschluss der Reihenschaltungseinheit angeschlossen ist.

Ein wesentlicher Vorteil des erfindungsgemäßen Multilevelumrichters ist darin zu sehen, dass das zumindest eine Teilmodul, im Vergleich zu Teilmodulen, die lediglich aus einer einfachen Serienschaltung aus Halb- und Vollbrücken bestehen, höhere Spitzenströme führen kann.

Ein weiterer wesentlicher Vorteil des erfindungsgemäßen Multilevelumrichters ist darin zu sehen, dass das zumindest eine Teilmodul auch negative Spannungslevel erzeugen kann und die Spannungszustände auch unabhängig vom Ladezustand der Kondensatoren der Teilmodule modulierbar sind.

Erfindungsgemäß ist vorgesehen, dass die Halbbrücke eine Reihenschaltung mit zwei in Reihe geschalteten Halbleiterschaltern, deren elektrische Verbindungsstelle den Eingangsanschluss des Teilmoduls bildet, und einen parallel zu der Reihenschaltung geschalteten Kondensator umfasst, dessen äußere Anschlüsse den ersten und den zweiten Halbbrückenausgangsanschluss der Halbbrücke bilden.

Bezüglich der Ausgestaltung der bidirektional schaltfähigen Schalteinrichtung ist es besonders vorteilhaft, wenn diese zwei elektrisch in Reihe geschaltete Halbleiterschalter umfasst, die jeweils unidirektional schaltfähig sind und Strom jeweils nur in einer Stromflussrichtung ein- und ausschalten können, und die Halbleiterschalter der Schalteinrichtung invers derart gepolt sind, dass ein Stromfluss in einer Richtung von einem der beiden Halbleiterschalter ein- und ausgeschaltet werden kann und ein Stromfluss in der entgegengesetzten Richtung von dem anderen der beiden Halbleiterschalter ein- und ausgeschaltet werden kann.

Besonders vorteilhaft ist es, wenn die Halbleiterschalter der bidirektional schaltfähigen Schalteinrichtung jeweils eine Freilaufdiode umfassen und die Anodenanschlüsse oder die Kathodenanschlüsse der Freilaufdioden der zwei Halbleiterschalter elektrisch miteinander verbunden sind.

Die erste und zweite Schalteinheit der Reihenschaltungseinheit umfassen bevorzugt jeweils zwei Halbleiterschalter, die elektrisch in Reihe geschaltet sind.

Darüber hinaus ist es bezüglich der Reihenschaltungseinheit vorteilhaft, wenn deren Halbleiterschalter jeweils eine Freilaufdiode umfassen und die Freilaufdioden jeweils derart elektrisch angeordnet sind, dass ihr Kathodenanschluss mittelbar oder unmittelbar elektrisch mit dem ersten Anschluss der Reihenschaltungseinheit und ihr Anodenanschluss mittelbar oder unmittelbar elektrisch mit dem zweiten Anschluss der Reihenschaltungseinheit in Verbindung steht und die Freilaufdioden einen Freilaufpfad bilden, der einen Stromfluss von dem zweiten Anschluss der Reihenschaltungseinheit in Richtung des ersten Anschlusses der Reihenschaltungseinheit zulässt.

Bezüglich der Verschaltung der Kondensatoren der Teilmodule ist erfindungsgemäß vorgesehen, dass einer der beiden Anschlüsse des Kondensators der Reihenschaltungseinheit den zweiten Anschluss der Reihenschaltungseinheit bildet und mit einem der beiden Anschlüsse des Kondensators der Halbbrücke verbunden ist und die beiden Kondensatoren und die Schalteinheiten der Reihenschaltungseinheit elektrisch eine geschlossene Schleife bilden.

Die Halbleiterschalter der Halbbrücke umfassen vorzugsweise jeweils eine Freilaufdiode. Bei einer solchen Ausgestaltung ist es besonders vorteilhaft, wenn die Freilaufdioden der Halbbrücke jeweils derart elektrisch angeordnet sind, dass ihr Kathodenanschluss mittelbar oder unmittelbar elektrisch mit dem ersten Halbbrückenausgangsanschluss und damit dem ersten Anschluss der Reihenschaltungseinheit und ihr Anodenanschluss mittelbar oder unmittelbar elektrisch mit dem zweiten Halbbrückenausgangsanschluss und damit dem zweiten Anschluss der Reihenschaltungseinheit in Verbindung steht und die Freilaufdioden der Halbbrücke einen Freilaufpfad bilden, der einen Stromfluss von dem zweiten Anschluss der Reihenschaltungseinheit in Richtung des ersten Anschlusses der Reihenschaltungseinheit zulässt und elektrisch parallel zu dem Freilaufpfad liegt, den die Freilaufdioden der Halbleiterschalter der Reihenschaltungseinheit bilden.

Die bidirektional schaltfähige Schalteinrichtung ist mit ihrem einen Anschluss an den Ausgangsanschluss des Teilmoduls und mit ihrem anderen Anschluss an die elektrische Verbindungsstelle zwischen dem Kondensator der Halbbrücke und dem Kondensator der Reihenschaltungseinheit angeschlossen.

Mit Blick auf die Bildung von Freilaufpfaden wird es als vorteilhaft angesehen, wenn die Halbleiterschalter der Halbbrücke und die der Reihenschaltungseinheit jeweils einen Transistor und eine dazu parallel geschaltete Freilaufdiode umfassen.

Um minimale Herstellungskosten zu erzielen, wird es als vorteilhaft angesehen, wenn die Halbleiterschalter der Halbbrücke, der Reihenschaltungseinheit und der bidirektional schaltfähigen Schalteinrichtung baugleich sind.

Bei den Halbleiterschaltern der Halbbrücke, der Reihenschaltungseinheit und der bidirektional schaltfähigen Schalteinrichtung handelt es sich vorzugsweise um bipolare Transistoren mit integrierter Gateelektrode, nachfolgend kurz IGBT genannt.

Vorzugsweise sind alle Teilmodule aller Teilmodulreihenschaltungen des Multilevelumrichters derart ausgestaltet, wie dies oben erläutert worden ist.

Die Erfindung bezieht sich darüber hinaus auf ein Teilmodul für einen modularen Multilevelumrichter. Ein solches Teilmodul umfasst erfindungsgemäß eine Halbbrücke, die einen Eingangsanschluss des Teilmoduls bildet und einen ersten und einen zweiten Halbbrückenausgangsanschluss umfasst, eine Reihenschaltungseinheit, die mit einem ersten Anschluss an den ersten Halbbrückenausgangsanschluss und mit einem zweiten Anschluss an den zweiten Halbbrückenausgangsanschluss angeschlossen ist, wobei die Reihenschaltungseinheit eine erste und eine zweite Schalteinheit sowie einen Kondensator umfasst und die elektrische Verbindungsstelle zwischen den zwei Schalteinheiten der Reihenschaltungseinheit einen Ausgangsanschluss des Teilmoduls bildet, und eine bidirektional schaltfähige Schalteinrichtung, die Strom unabhängig von der Stromflussrichtung ein- und ausschalten kann und mit einem Anschluss an den Ausgangsanschluss des Teilmoduls und mit einem anderen Anschluss an den zweiten Halbbrückenausgangsanschluss und damit an den zweiten Anschluss der Reihenschaltungseinheit angeschlossen ist.

Bezüglich der Vorteile des erfindungsgemäßen Teilmoduls sei auf die obigen Erläuterungen im Zusammenhang mit dem erfindungsgemäßen Multilevelumrichter verwiesen.

Die Erfindung wird nachfolgend anhand von Ausführungsbeispielen näher erläutert; dabei zeigen beispielhaft:
- Figur 1: ein Ausführungsbeispiel für einen erfindungsgemäßen Multilevelumrichter,
- Figur 2: ein erstes Ausführungsbeispiel für ein für den Multilevelumrichter gemäß Figur 1 geeignetes Teilmodul,
- Fig. 3-8: zur Erläuterung der Funktionsweise verschiedene Schaltzustände des Teilmoduls gemäß Figur 2,
- Figur 9: ein zweites Ausführungsbeispiel für ein für den Multilevelumrichter gemäß Figur 1 geeignetes Teilmodul,
- Figur 10: ein drittes Ausführungsbeispiel für ein für den Multilevelumrichter gemäß Figur 1 geeignetes Teilmodul,
- Figur 11: ein Ausführungsbeispiel für einen erfindungsgemäßen Multilevelumrichter auf der Basis einer Sternschaltung von Untereinheiten und
- Figur 12: ein Ausführungsbeispiel für einen erfindungsgemäßen Multilevelumrichter auf der Basis einer Dreieckschaltung von Untereinheiten.

In den Figuren werden der Übersicht halber für identische oder vergleichbare Komponenten stets dieselben Bezugszeichen verwendet.

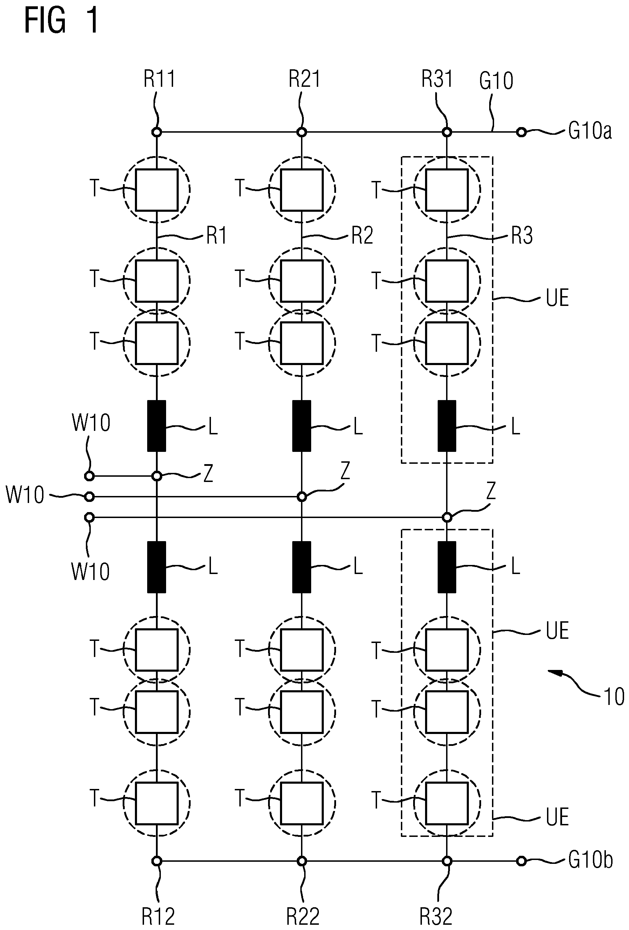

In der Figur 1 ist ein Ausführungsbeispiel für einen dreiphasigen modularen Multilevelumrichter 10 gezeigt. Dieser umfasst Wechselspannungsanschlüsse W10 zum Einspeisen oder zur Entnahme von Wechselstrom. Darüber hinaus ist er mit einer Gleichspannungsseite G10 ausgestattet, die zwei Gleichspannungsanschlüsse G10a und G10b umfasst, über die Gleichstrom eingespeist oder entnommen werden kann.

Der Multilevelumrichter 10 weist drei parallel geschaltete Reihenschaltungen R1, R2 und R3 auf, deren äußere Anschlüsse R11, R21 und R31 mit dem Gleichspannungsanschluss G10a in Verbindung stehen. Die äußeren Anschlüsse R12, R22 und R32 stehen mit dem Gleichspannungsanschluss G10b der Gleichspannungsseite G10 in Verbindung. Mit anderen Worten bilden also die äußeren Anschlüsse der drei Reihenschaltungen R1, R2 und R3 die Gleichspannungsseite G10 des Multilevelumrichters 10.

Jede der drei Reihenschaltungen R1, R2 und R3 ist beispielsweise jeweils mit sechs in Reihe geschalteten Teilmodulen T sowie zwei Induktivitäten L ausgestattet. Jeweils zwischen den zwei Induktivitäten L befindet sich ein Zwischenanschluss Z, der potentialmäßig zwischen den in der Figur 1 oberen drei Teilmodulen und den in Figur 1 unteren drei Teilmodulen liegt und einen der drei Wechselspannungsanschlüsse W10 des Multilevelumrichters 10 bildet. Durch die Zwischenanschlüsse Z werden die drei Reihenschaltungen R1, R2 und R3 jeweils in zwei Untereinheiten unterteilt, die jeweils eine Mehrzahl an in Reihe geschalteten Teilmodulen T und eine Induktivität L aufweisen und somit jeweils für sich eine Teilmodulreihenschaltung UE bilden, die mindestens zwei in Reihe geschaltete Teilmodule und eine Induktivität umfasst.

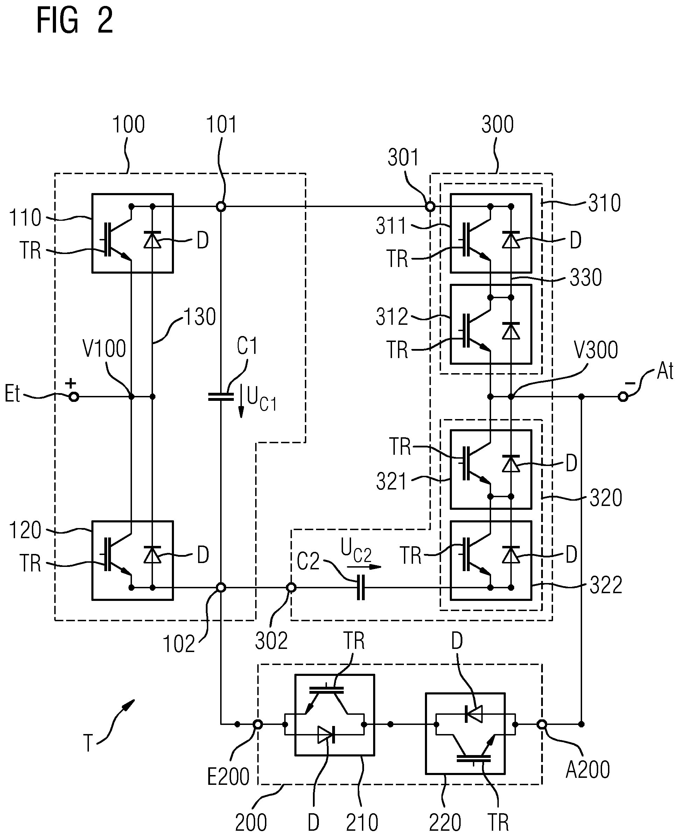

Ausführungsbeispiele für bevorzugte Ausgestaltungen der Teilmodule T werden nachfolgend im Zusammenhang mit den Figuren 2 bis 4 näher erläutert.

Die Figur 2 zeigt ein Ausführungsbeispiel für ein Teilmodul T, das bei dem modularen Multilevelumrichter gemäß Figur 1 eingesetzt werden kann. Das Teilmodul T umfasst eine Halbbrücke 100, eine bidirektional schaltende Schalteinrichtung 200 sowie eine Reihenschaltungseinheit 300.

Die Halbbrücke 100 weist eine Reihenschaltung mit zwei in Reihe geschalteten Halbleiterschaltern 110 und 120 auf, deren elektrische Verbindungsstelle V100 den Eingangsanschluss Et des Teilmoduls T bildet. Parallel zu der Reihenschaltung aus den beiden Halbleiterschaltern 110 und 120 ist ein Kondensator C1 geschaltet, dessen äußere Anschlüsse einen ersten Halbbrückenausgangsanschluss 101 des Teilmoduls T sowie einen zweiten Halbbrückenausgangsanschluss 102 bilden.

Die beiden Halbleiterschalter 110 und 120 der Halbbrücke 100 weisen jeweils einen Transistor TR auf, bei dem es sich beispielsweise um eine IGBT handeln kann. Parallel zu dem Transistor des jeweiligen Halbleiterschalters ist eine Freilaufdiode D geschaltet.

Die Freilaufdioden D der beiden Halbleiterschalter 110 und 120 bzw. der Halbbrücke 100 sind elektrisch derart zueinander angeordnet, dass ihr Kathodenanschluss mittelbar bzw. unmittelbar jeweils elektrisch mit dem ersten Halbbrückenausgangsanschluss 101 der Halbbrücke 100 und ihr Anodenanschluss mittelbar oder unmittelbar jeweils elektrisch mit dem zweiten Halbbrückenausgangsanschluss 102 in Verbindung steht. Die Freilaufdioden D der Halbbrücke 100 bilden damit einen Freilaufpfad, der einen Stromfluss von dem zweiten Halbbrückenausgangsanschluss 102 der Halbbrücke 100 in Richtung des ersten Halbbrückenausgangsanschlusses 101 zulässt. Der Freilaufpfad der Halbbrücke 100 ist in der Figur 2 mit dem Bezugszeichen 130 gekennzeichnet.

Die bidirektional schaltende bzw. schaltfähige Schalteinrichtung 200 umfasst zwei elektrisch in Reihe geschaltete Halbleiterschalter 210 und 220, die jeweils unidirektional schaltfähig sind und Strom jeweils nur in einer Stromrichtung (in technisch ausreichendem Maße) ein- und ausschalten können. Die Halbleiterschalter 210 und 220 sind invers derart gepolt, dass ein Stromfluss in einer Richtung von einem der beiden Halbleiterschalter ein- und ausgeschaltet werden kann und ein Stromfluss in entgegengesetzter Richtung von dem jeweils anderen der beiden Halbleiterschalter ein- und ausgeschaltet werden kann.

Die Halbleiterschalter 210 und 220 umfassen vorzugsweise jeweils einen unidirektional schaltfähigen Transistor TR, vorzugsweise in Form eines IGBT, sowie eine dazu parallelgeschaltete Freilaufdiode D. Aufgrund der inversen Verschaltung der Halbleiterschalter 210 und 220 sind bei dem Ausführungsbeispiel gemäß Figur 2 die Kathodenanschlüsse der beiden Freilaufdioden D unmittelbar miteinander verbunden, so dass sich die Freilaufdioden D elektrisch gegenseitig sperren und - im Unterschied zu den Freilaufdioden D der Halbbrücke 100 - keinen Freilaufpfad bilden können.

Die Reihenschaltungseinheit 300 ist mit einem ersten Anschluss 301 an den ersten Halbbrückenausgangsanschluss 101 der Halbbrücke 100 und mit einem zweiten Anschluss 302 an den zweiten Halbbrückenausgangsanschluss 102 der Halbbrücke 100 angeschlossen. Die Reihenschaltungseinheit 100 umfasst eine erste Schalteinheit 310 und eine zweite Schalteinheit 320 sowie einen Kondensator C2, wobei die elektrische Verbindungsstelle V300 zwischen den beiden Schalteinheiten 310 und 320 der Reihenschaltungseinheit 300 den Ausgangsanschluss At des Teilmoduls T bildet.

Um zu gewährleisten, dass die beiden Schalteinheiten 310 und 320 anliegende Spannungen unabhängig von den Schaltzuständen der Schalter des Teilmoduls T sicher tragen können, ist bei dem Ausführungsbeispiel gemäß Figur 2 vorgesehen, dass die beiden Schalteinheiten 310 und 320 jeweils zwei in Reihe geschaltete Halbleiterschalter umfassen. Die Halbleiterschalter der ersten Schalteinheit 310 sind in der Figur 2 mit dem Bezugszeichen 311 und 312 gekennzeichnet. Die beiden Halbleiterschalter der Schalteinheit 320 tragen in der Figur 2 die Bezugszeichen 321 und 322.

Die Halbleiterschalter 311, 312, 321 und 322 der Reihenschaltungseinheit 300 umfassen jeweils einen unidirektional schaltfähigen Transistor TR, vorzugsweise in Form eines IGBT, sowie eine dazu parallelgeschaltete Freilaufdiode D. Die Freilaufdioden D der vier Halbleiterschalter der Reihenschaltungseinheit 300 sind elektrisch derart angeordnet, dass ihr Kathodenanschluss jeweils mittelbar oder unmittelbar mit dem ersten Anschluss 301 der Reihenschaltungseinheit 300 und der Anodenanschluss jeweils mittelbar oder unmittelbar mit dem zweiten Anschluss 302 der Reihenschaltungseinheit 300 verbunden ist. Die vier Freilaufdioden D der Reihenschaltungseinheit 300 bilden somit einen Freilaufpfad, der in der Figur 2 mit dem Bezugszeichen 330 gekennzeichnet ist. Der Freilaufpfad 330 erlaubt einen Stromfluss von dem zweiten Anschluss 302 der Reihenschaltungseinheit 300 in Richtung des ersten Anschlusses 301. Der Freilaufpfad 330 liegt somit zu dem Freilaufpfad 130 der Halbbrücke 100 parallel.

Die Figur 2 lässt darüber hinaus erkennen, dass einer der beiden Anschlüsse des Kondensators C2 der Reihenschaltungseinheit 300 mit dem zweiten Anschluss 302 der Reihenschaltungseinheit 300 und damit mit dem zweiten Halbbrückenausgangsanschluss 102 der Halbbrücke 100 verbunden ist. Aufgrund dieser Verschaltung steht der Kondensator C2 der Reihenschaltungseinheit 300 elektrisch unmittelbar in Verbindung mit dem Kondensator C1 der Halbbrücke 100.

Bezüglich der Verschaltung der bidirektional schaltfähigen Schalteinrichtung 200 lässt sich der Figur 2 entnehmen, dass die Schalteinrichtung 200 mit ihrem einen Anschluss A200 an den Ausgangsanschluss At und mit ihrem anderen Anschluss E200 an die elektrische Verbindungsstelle zwischen den beiden Kondensatoren C1 und C2 bzw. mit anderen Worten an den zweiten Halbbrückenausgangsanschluss 102 und den zweiten Anschluss 302 der Reihenschaltungseinheit 300 angeschlossen ist.

Aufgrund der Verschaltung der Komponenten des Teilmoduls T gemäß Figur 2 können bei diesem zwischen dem Eingangsanschluss Et und dem Ausgangsanschluss At des Teilmoduls T folgende Spannungszustände geschaltet werden, nämlich wahlweise:
- einer, bei dem die Spannung zwischen dem Eingangsanschluss Et und dem Ausgangsanschluss At des Teilmoduls T der Summe beider Kondensatorspannungen Uc1 + Uc2 entspricht,
- einer, bei dem die Spannung zwischen dem Eingangsanschluss Et und dem Ausgangsanschluss At des Teilmoduls T jeweils nur einer der Kondensatorspannungen entspricht, also +Uc1 oder +Uc2,
- einer, bei dem die Spannung zwischen dem Eingangsanschluss Et und dem Ausgangsanschluss At des Teilmoduls T einem Klemmenkurzschluss oder einem Freilauf entspricht, und
- einer, bei dem die Spannung zwischen dem Eingangsanschluss Et und dem Ausgangsanschluss At des Teilmoduls T der negativen Kondensatorspannung des Kondensators C1, also - Uc1, entspricht.

Eine Übersicht dieser möglichen Schaltzustände ist in der nachfolgenden Tabelle in Abhängigkeit von der Schaltstellung der Halbleiterschalter 110, 120, 311, 312, 320, 321, 210 und 220 aufgelistet:

| Nr. | 110 | 120 | 311 | 312 | 321 | 322 | 210 | 220 | Ut |
|---|---|---|---|---|---|---|---|---|---|
| 1 | 1 | 0 | 0 | 0 | 1 | 1 | 0 | 0 | Uc1+Uc2 |
| 2 | 1 | 0 | 0 | 0 | 0 | 0 | 1 | 1 | Uc1 |
| 3 | 0 | 1 | 0 | 0 | 1 | 1 | 0 | 0 | Uc2 |
| 4 | 0 | 1 | 1 | 1 | 0 | 0 | 0 | 0 | -Uc1 |
| 5 | 1 | 0 | 1 | 1 | 0 | 0 | 0 | 0 | 0 |
| 6 | 0 | 1 | 0 | 0 | 0 | 0 | 1 | 1 | 0 |

Die Schaltstellung "1" bezeichnet dabei jeweils einen eingeschalteten Halbleiterschalter und die Schaltstellung "0" jeweils einen ausgeschalteten Halbleiterschalter; Ut bezeichnet die Spannung zwischen dem Eingangsanschluss Et und dem Ausgangsanschluss At des Teilmoduls T.

Die Schaltzustände Nr. 1 bis Nr. 6 sind alle jeweils unabhängig von der Stromrichtung (bidirektional) schaltbar, und es führen immer jeweils drei Halbleiterschalter den Laststrom. Dabei existieren für den Klemmenkurzschluss (Freilauf) zwei mögliche Strompfade.

Die Serienschaltung der Halbleiterschalter 311 und 312 ist bei dem Ausführungsbeispiel gemäß Figur 2 vorteilhaft, um die Sperrspannung beider Kondensatoren C1 und C2 sicher aufnehmen zu können, wenn die Halbleiterschalter 321 und 322 auf Durchlass geschaltet sind (Schaltzustände Nr. 1 und 3).

Analog sind die Halbleiterschalter 321 und 322 bei dem Ausführungsbeispiel gemäß Figur 2 als Serienschaltung ausgeführt, um die nötige Sperrspannung bei eingeschalteten Halbleiterschaltern 311 und 312 sicher aufnehmen zu können (Schaltzustände Nr. 4 und 5).

Die Halbleiterschalter 210 und 220 verhindern gemeinsam, dass die Kondensatoren C1 und C2 kurzgeschlossen werden, wenn die Halbleiterschalter 311 und 312 bzw. 321 und 322 eingeschaltet sind.

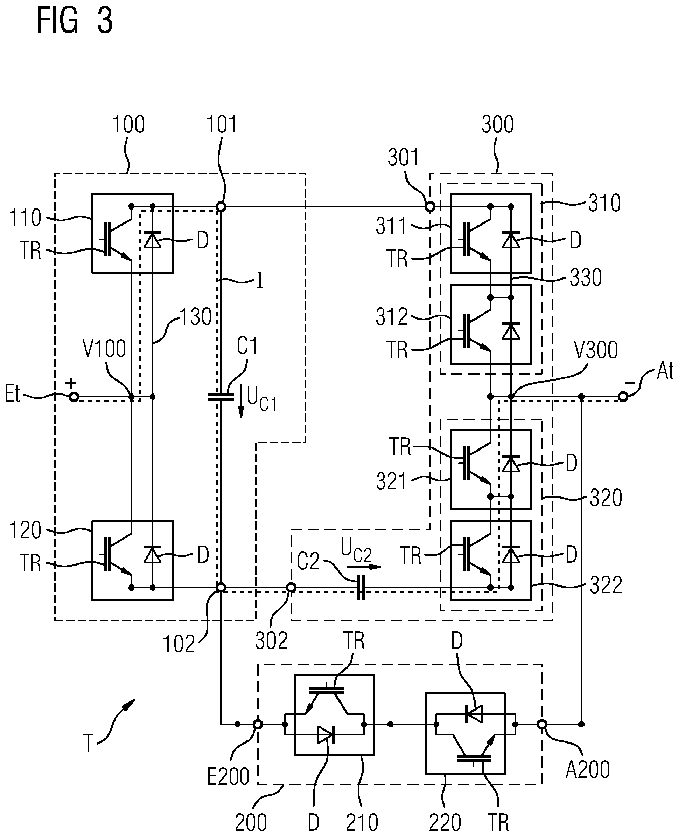

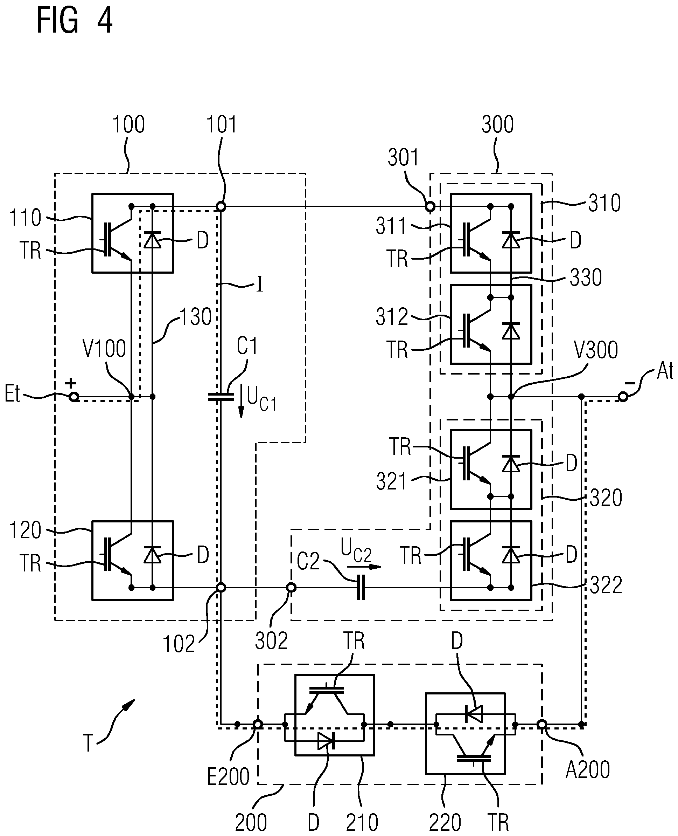

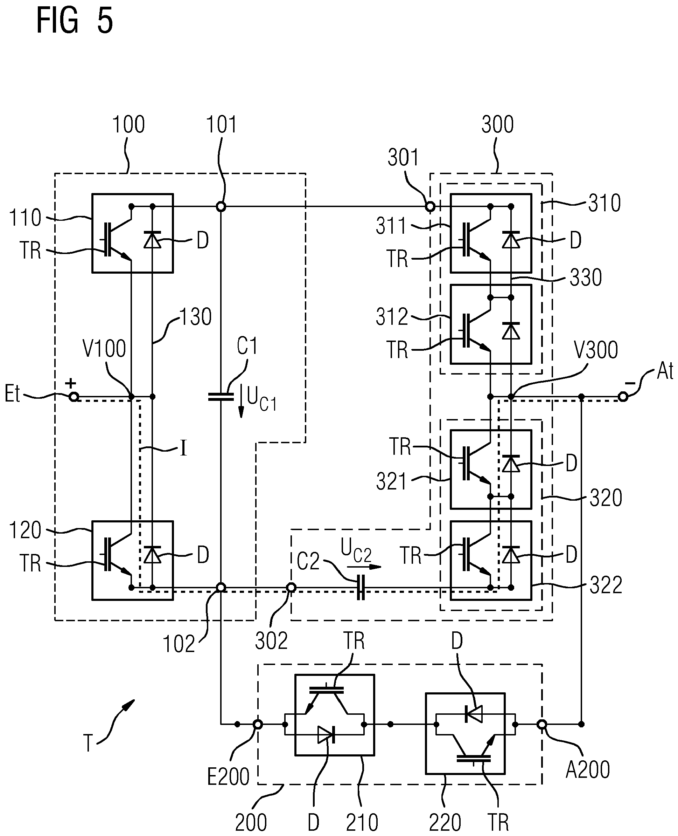

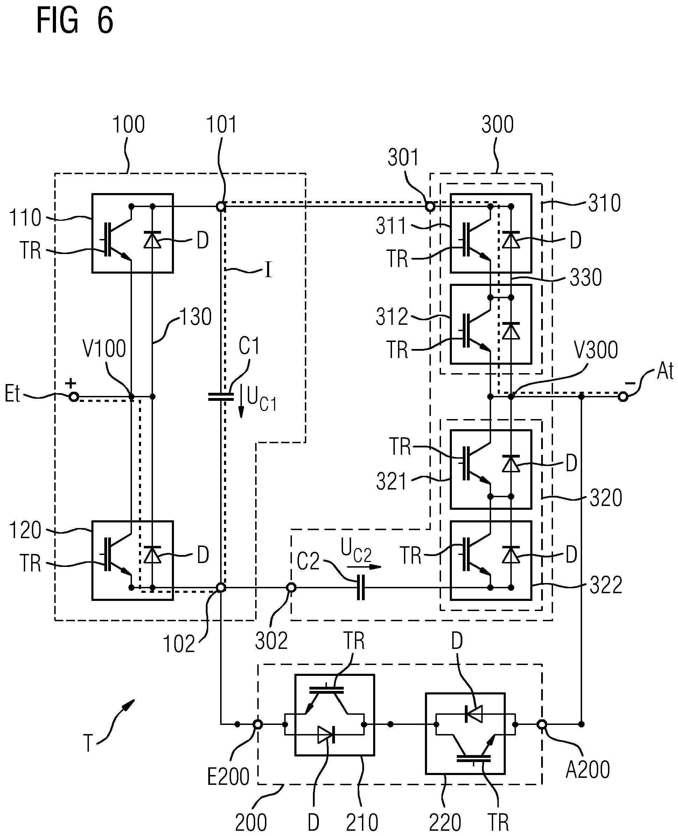

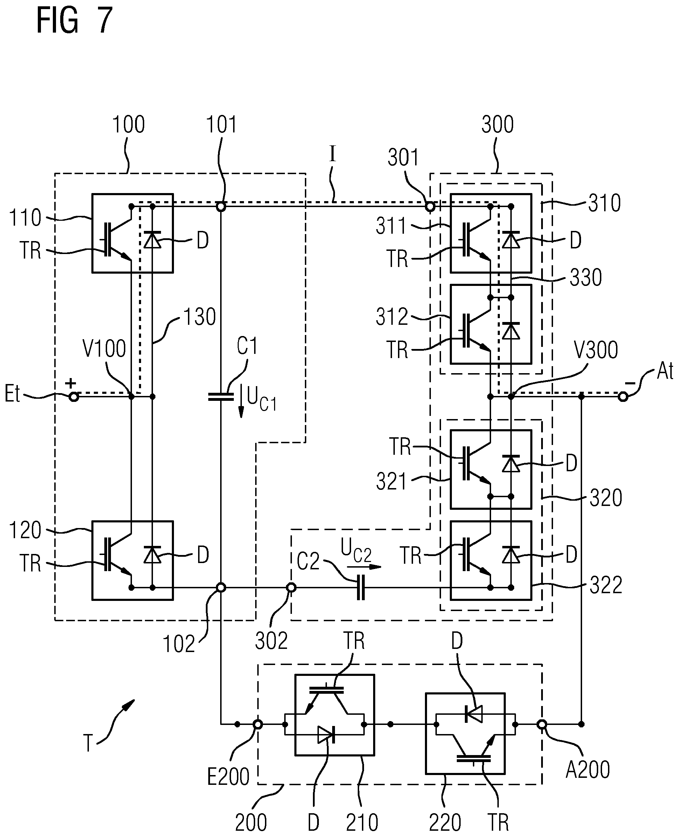

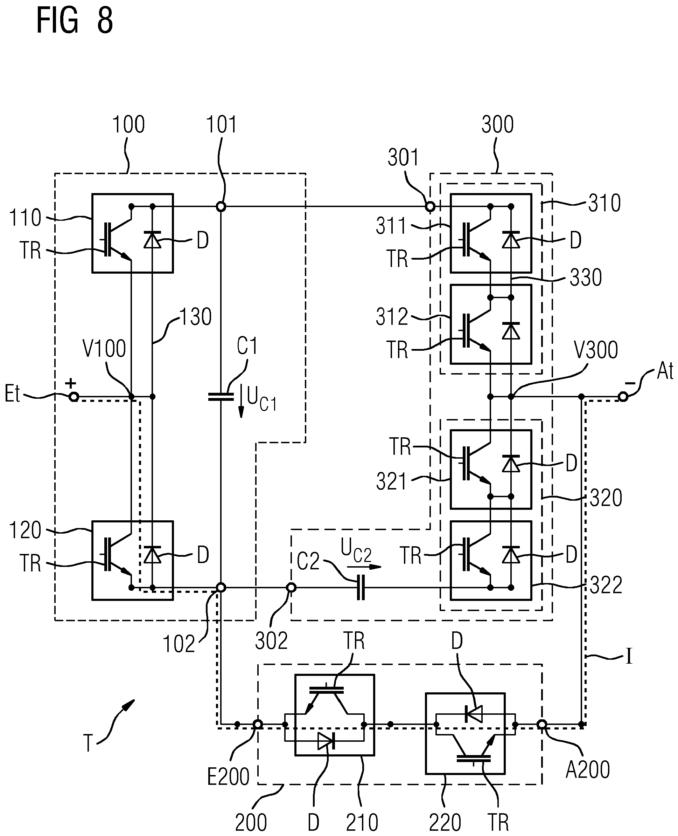

Eine Übersicht der resultierenden Strompfade, die mit dem Bezugszeichen I gekennzeichnet sind, bei den einzelnen Schaltzuständen ist in den Figuren 3 bis 8 dargestellt; dabei zeigt die Figur 3 den Schaltzustand Nr. 1, die Figur 4 den Schaltzustand Nr. 2, die Figur 5 den Schaltzustand Nr. 3, die Figur 6 den Schaltzustand Nr. 4, die Figur 7 den Schaltzustand Nr. 5 und die Figur 8 den Schaltzustand Nr. 6.

Die Halbleiterschalter 110, 120, 311, 312, 320, 321, 210 und 220 sind bei dem Ausführungsbeispiel gemäß Figur 2 vorzugsweise baugleich.

Bei dem Teilmodul gemäß den Figuren 2 bis 8 kann im Vergleich zu einer einfachen Serienschaltung aus Halb- und Vollbrücken ein um etwa 25% höherer thermischer Spitzenstrom erreicht werden, da zwei komplett unterschiedliche Freilaufpfade zur Verfügung stehen und somit die Verlustleistung günstiger auf die einzelnen Halbleiter verteilt werden kann. Bei einer Serienschaltung aus Halb- und Vollbrücke muss bei diesen Zuständen einer der Halbleiterschalter stets den Laststrom führen und wird dadurch stärker beansprucht.

Verglichen mit dem Teilmodul aus der eingangs angegebenen internationalen Patentanmeldung WO 2015/036149 ermöglicht das Ausführungsbeispiel gemäß den Figuren 2 bis 8 in vorteilhafter Weise das stromrichtungsunabhängige Stellen eines negativen Spannungslevels. Weiterhin sind alle Spannungszustände unabhängig vom Ladezustand der beiden Kondensatoren modulierbar.

Auch sind bei dem Teilmodul gemäß den Figuren 2 bis 8 in vorteilhafter Weise zahlreiche Zustände für beide Stromrichtungen modulierbar und dabei nicht an den Ladezustand der Kondensatoren geknüpft, wodurch der Regelaufwand reduziert wird.

Mit Blick auf minimale Baukosten wird es als vorteilhaft angesehen, wenn die in der Figur 2 gezeigten Halbleiterschalter jeweils baugleich sind und jeweils einen Halbleitertransistor TR und eine dazu parallelgeschaltete Freilaufdiode D umfassen.

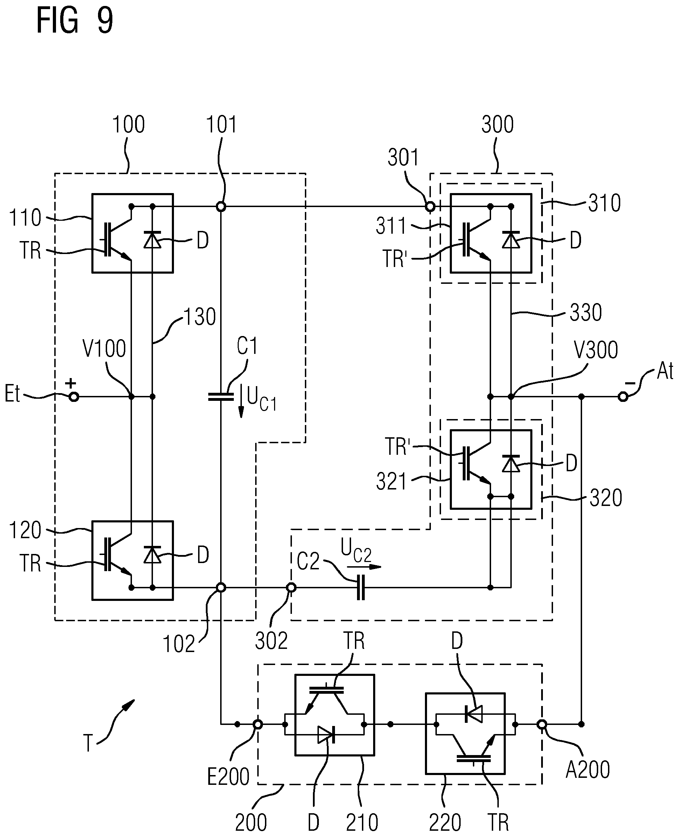

Die Figur 9 zeigt ein weiteres Ausführungsbeispiel für ein Teilmodul T, das bei dem Multilevelumrichter 10 gemäß Figur 1 eingesetzt werden kann. Bei dem Teilmodul T gemäß Figur 9 werden die beiden Schalteinheiten 310 und 320 der Reihenschaltungseinheit 300 jeweils nur durch einen einzigen Halbleiterschalter 311 bzw. 321 gebildet.

Um das im Zusammenhang mit den Figuren 2 bis 8 oben beschriebene Schaltverhalten des Schaltmoduls T sicher zu gewährleisten, ist bei dem Teilmodul T gemäß Figur 9 vorgesehen, dass die Spannungsfestigkeit bzw. die Spannungstragkraft der Halbleiterschalter 311 und 321, insbesondere deren Transistoren TR', jeweils mindestens doppelt so groß ausgelegt ist wie die Spannungsfestigkeit bzw. Spannungstragkraft der übrigen Halbleiterschalter des Teilmoduls T.

Im Übrigen gelten die obigen Ausführungen im Zusammenhang mit dem Teilmodul T gemäß den Figuren 2 bis 8 für das Teilmodul T gemäß Figur 9 entsprechend, so dass diesbezüglich auf die obigen Ausführungen verwiesen sei.

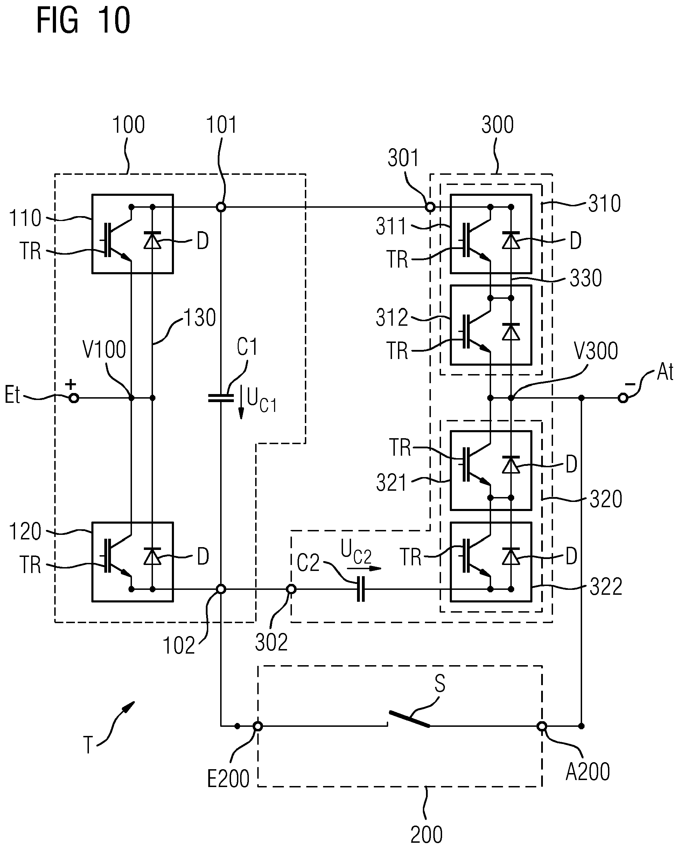

Die Figur 10 zeigt ein drittes Ausführungsbeispiel für ein Teilmodul T, das bei dem Multilevelumrichter 10 gemäß Figur 1 eingesetzt werden kann.

Bei dem Teilmodul T gemäß Figur 10 ist vorgesehen, dass die bidirektional schaltfähige Schalteinrichtung 200 durch einen einzigen, bidirektional schaltfähigen Schalter S realisiert ist. Ein solcher Schalter S kann beispielsweise durch ein mechanisches Schaltelement gebildet sein. Im Übrigen gelten die obigen Ausführungen im Zusammenhang mit den Figuren 2 bis 8 für das Ausführungsbeispiel gemäß Figur 10 entsprechend, so dass diesbezüglich auf die obigen Erläuterungen verwiesen sei.

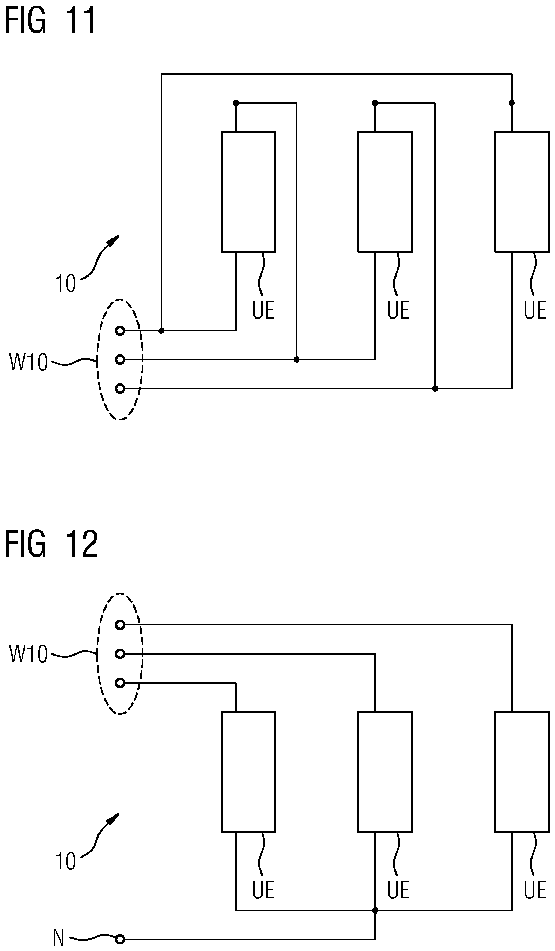

Im Übrigen sei erwähnt, dass auch andere Bauformen für auf Teilmodulen basierenden Multilevelumrichtern 10 möglich sind. Beispielsweise können die in der Figur 1 gezeigten Untereinheiten UE auch anders verschaltet sein, zum Beispiel in Form einer Dreieckschaltung (vgl. Figur 11) oder einer Sternschaltung (Figur 12). Die obigen Ausführungen im Zusammenhang mit den Figuren 2 bis 10 gelten für die Multilevelumrichter 10 gemäß den Figuren 11 und 12 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Multilevelumrichter
- 100: Halbbrücke
- 101: Halbbrückenausgangsanschluss
- 102: Halbbrückenausgangsanschluss
- 110: Halbleiterschalter
- 120: Halbleiterschalter
- 130: Freilaufpfad
- 200: Schalteinrichtung
- 210: Halbleiterschalter
- 220: Halbleiterschalter
- 300: Reihenschaltungseinheit
- 301: Anschluss
- 302: Anschluss
- 310: Schalteinheit
- 311: Halbleiterschalter
- 312: Halbleiterschalter
- 320: Schalteinheit
- 321: Halbleiterschalter
- 322: Halbleiterschalter
- 330: Freilaufpfad

- A200: Anschluss
- At: Ausgangsanschluss
- C1: Kondensator
- C2: Kondensator
- D: Freilaufdiode
- E200: Anschluss
- Et: Eingangsanschluss
- G10: Gleichspannungsseite
- G10a: Gleichspannungsanschluss
- G10b: Gleichspannungsanschluss
- I: Strompfad
- L: Induktivität
- R1: Reihenschaltung
- R2: Reihenschaltung
- R3: Reihenschaltung
- R11: äußerer Anschluss
- R12: äußerer Anschluss
- R21: äußerer Anschluss
- R22: äußerer Anschluss
- R31: äußerer Anschluss
- R32: äußerer Anschluss
- S: Schalter
- T: Teilmodul
- TR: Transistor
- TR': Transistor
- Uc1: Kondensatorspannung
- Uc2: Kondensatorspannung
- UE: Teilmodulreihenschaltung
- V100: Verbindungsstelle
- V300: Verbindungsstelle
- W10: Wechselspannungsanschluss
- Z: Zwischenanschluss

## Patentansprüche

1. Teilmodul (T) für einen modularen Multilevelumrichter, aufweisend
- eine Halbbrücke (100), die einen Eingangsanschluss (Et) des Teilmoduls (T) bildet und einen ersten und einen zweiten Halbbrückenausgangsanschluss (101, 102) umfasst, und
- eine Reihenschaltungseinheit (300), die mit einem ersten Anschluss (301) an den ersten Halbbrückenausgangsanschluss (101) und mit einem zweiten Anschluss (302) an den zweiten Halbbrückenausgangsanschluss (102) angeschlossen ist, wobei die Reihenschaltungseinheit (300) eine erste und eine zweite Schalteinheit (310, 320) sowie einen Kondensator (C2) umfasst und die elektrische Verbindungsstelle (V300) zwischen den zwei Schalteinheiten (310, 320) der Reihenschaltungseinheit (300) einen Ausgangsanschluss (At) des Teilmoduls (T) bildet,
**gekennzeichnet durch**
- eine bidirektional schaltfähige Schalteinrichtung (200), die Strom unabhängig von der Stromflussrichtung ein- und ausschalten kann und mit einem Anschluss (A200) an den Ausgangsanschluss (At) des Teilmoduls (T) und mit einem anderen Anschluss (E200) an den zweiten Halbbrückenausgangsanschluss (102) und damit an den zweiten Anschluss (302) der Reihenschaltungseinheit (300) angeschlossen ist,
- wobei die Halbbrücke (100) eine Reihenschaltung mit zwei in Reihe geschalteten Halbleiterschaltern (110, 120), deren elektrische Verbindungsstelle (V100) den Eingangsanschluss (Et) des Teilmoduls (T) bildet, und einen parallel zu der Reihenschaltung geschalteten Kondensator (C1) umfasst, dessen äußere Anschlüsse den ersten und den zweiten Halbbrückenausgangsanschluss (101, 102) der Halbbrücke (100) bilden,
- einer der beiden Anschlüsse des Kondensators (C2) der Reihenschaltungseinheit (300) den zweiten Anschluss (302) der Reihenschaltungseinheit (300) bildet und mit einem der beiden Anschlüsse des Kondensators (C1) der Halbbrücke (100) verbunden ist und die beiden Kondensatoren (C1, C2) und die Schalteinheiten (310, 320) der Reihenschaltungseinheit (300) elektrisch eine Schleife bilden, und
- die bidirektional schaltfähige Schalteinrichtung (200) mit ihrem anderen Anschluss (E200) an die elektrische Verbindungsstelle zwischen dem Kondensator (C1) der Halbbrücke (100) und dem Kondensator (C2) der Reihenschaltungseinheit (300) angeschlossen ist.

2. Modularer Multilevelumrichter (10) mit zumindest einer Teilmodulreihenschaltung (UE), die mindestens zwei in Reihe geschaltete Teilmodule (T) und eine Induktivität (L) umfasst, **dadurch gekennzeichnet, dass** zumindest eines der Teilmodule (T) ein Teilmodul gemäß Anspruch 1 ist.

3. Multilevelumrichter nach Anspruch 2,
**dadurch gekennzeichnet, dass**
- die bidirektional schaltfähige Schalteinrichtung (200) zwei elektrisch in Reihe geschaltete Halbleiterschalter (210, 220) umfasst, die jeweils unidirektional schaltfähig sind und Strom jeweils nur in einer Stromflussrichtung ein- und ausschalten können, und
- die Halbleiterschalter (210, 220) der Schalteinrichtung (200) invers derart gepolt sind, dass ein Stromfluss in einer Richtung von einem der beiden Halbleiterschalter ein- und ausgeschaltet werden kann und ein Stromfluss in der entgegengesetzten Richtung von dem anderen der beiden Halbleiterschalter ein- und ausgeschaltet werden kann.

4. Multilevelumrichter nach Anspruch 3,
**dadurch gekennzeichnet, dass** die Halbleiterschalter der bidirektional schaltfähigen Schalteinrichtung (200) jeweils eine Freilaufdiode (D) umfassen und die Anodenanschlüsse oder die Kathodenanschlüsse der Freilaufdioden (D) der zwei Halbleiterschalter elektrisch miteinander verbunden sind.

5. Multilevelumrichter nach einem der Ansprüche 2 bis 4,
**dadurch gekennzeichnet, dass** die erste und zweite Schalteinheit (310, 320) der Reihenschaltungseinheit (300) jeweils zwei Halbleiterschalter (311, 312, 321, 322) umfassen, die elektrisch in Reihe geschaltet sind.

6. Multilevelumrichter nach Anspruch 5,
**dadurch gekennzeichnet, dass**
- die Halbleiterschalter (311, 312, 321, 322) der Reihenschaltungseinheit (300) jeweils eine Freilaufdiode (D) umfassen und
- die Freilaufdioden (D) jeweils derart elektrisch angeordnet sind, dass ihr Kathodenanschluss mittelbar oder unmittelbar elektrisch mit dem ersten Anschluss (301) der Reihenschaltungseinheit (300) und ihr Anodenanschluss mittelbar oder unmittelbar elektrisch mit dem zweiten Anschluss (302) der Reihenschaltungseinheit (300) in Verbindung steht und die Freilaufdioden (D) einen Freilaufpfad (330) bilden, der einen Stromfluss von dem zweiten Anschluss (302) der Reihenschaltungseinheit (300) in Richtung des ersten Anschlusses (310) der Reihenschaltungseinheit (300) zulässt.

7. Multilevelumrichter nach einem der Ansprüche 2 bis 6,
**dadurch gekennzeichnet, dass**
- die Halbleiterschalter der Halbbrücke (100) jeweils eine Freilaufdiode (D) umfassen und
- die Freilaufdioden (D) der Halbbrücke (100) jeweils derart elektrisch angeordnet sind, dass ihr Kathodenanschluss mittelbar oder unmittelbar elektrisch mit dem ersten Halbbrückenausgangsanschluss (101) und damit dem ersten Anschluss (301) der Reihenschaltungseinheit (300) und ihr Anodenanschluss mittelbar oder unmittelbar elektrisch mit dem zweiten Halbbrückenausgangsanschluss (102) und damit dem zweiten Anschluss (302) der Reihenschaltungseinheit (300) in Verbindung steht und die Freilaufdioden (D) der Halbbrücke (100) einen Freilaufpfad (130) bilden, der einen Stromfluss von dem zweiten Anschluss (302) der Reihenschaltungseinheit (300) in Richtung des ersten Anschlusses (301) der Reihenschaltungseinheit (300) zulässt und elektrisch parallel zu dem Freilaufpfad (330) liegt, den die Freilaufdioden (D) der Halbleiterschalter der Reihenschaltungseinheit (300) bilden.

8. Multilevelumrichter nach einem der Ansprüche 2 bis 7,
**dadurch gekennzeichnet, dass** die Halbleiterschalter der Halbbrücke (100), der Reihenschaltungseinheit (300) und der bidirektional schaltfähigen Schalteinrichtung (200) jeweils einen Transistor (TR) und eine dazu parallel geschaltete Freilaufdiode (D) umfassen.

9. Multilevelumrichter nach einem der Ansprüche 2 bis 8,
**dadurch gekennzeichnet, dass** die Halbleiterschalter der Halbbrücke (100), der Reihenschaltungseinheit (300) und der bidirektional schaltfähigen Schalteinrichtung (200) baugleich sind.

10. Multilevelumrichter nach einem der Ansprüche 2 bis 9,
**dadurch gekennzeichnet, dass** die Halbleiterschalter der Halbbrücke (100), der Reihenschaltungseinheit (300) und der bidirektional schaltfähigen Schalteinrichtung (200) Bipolartransistoren mit integrierter Gateelektrode sind.

11. Multilevelumrichter nach einem der Ansprüche 2 bis 10,
**dadurch gekennzeichnet, dass** alle Teilmodule (T) aller Teilmodulreihenschaltungen des Multilevelumrichters die Merkmale gemäß einem der Ansprüche 1 bis 11 aufweisen.

## Claims

1. Submodule (T) for a modular multilevel converter, having
- a half-bridge (100) that forms an input terminal (Et) of the submodule (T) and comprises a first and a second half-bridge output terminal (101, 102), and
- a series circuit unit (300) that is connected, at a first terminal (301), to the first half-bridge output terminal (101) and, at a second terminal (302), to the second half-bridge output terminal (102), wherein the series circuit unit (300) comprises a first and a second switching unit (310, 320) and a capacitor (C2) and the electrical connection point (V300) between the two switching units (310, 320) of the series circuit unit (300) forms an output terminal (At) of the submodule (T),
**characterized by**
- a bidirectionally switchable switching device (200) that is able to switch current on and off independently of the current flow direction and is connected, at a terminal (A200), to the output terminal (At) of the submodule (T) and, at another terminal (E200), to the second half-bridge output terminal (102) and thus to the second terminal (302) of the series circuit unit (300),
- wherein the half-bridge (100) forms a series circuit having two series-connected semiconductor switches (110, 120), whose electrical connection point (V100) forms the input terminal (Et) of the submodule (T), and comprises a capacitor (C1) connected in parallel with the series circuit and whose outer terminals form the first and the second half-bridge output terminal (101, 102) of the half-bridge (100),
- one of the two terminals of the capacitor (C2) of the series circuit unit (300) forms the second terminal (302) of the series circuit unit (300) and is connected to one of the two terminals of the capacitor (C1) of the half-bridge (100) and the two capacitors (C1, C2) and the switching units (310, 320) of the series circuit unit (300) form an electrical loop, and
- the bidirectionally switchable switching device (200) is connected, at its other terminal (E200), to the electrical connection point between the capacitor (C1) of the half-bridge (100) and the capacitor (C2) of the series circuit unit (300).

2. Modular multilevel converter (10) having at least one submodule series circuit (UE) that comprises at least two series-connected submodules (T) and an inductor (L), **characterized in that**
at least one of the submodules (T) is a submodule according to Claim 1.

3. Multilevel converter according to Claim 2,
**characterized in that**
- the bidirectionally switchable switching device (200) comprises two electrically series-connected semiconductor switches (210, 220) that are each unidirectionally switchable and are each able to switch current on and off only in one current flow direction, and
- the semiconductor switches (210, 220) of the switching device (200) have reverse polarity, such that a current flow in one direction is able to be switched on and off by one of the two semiconductor switches and a current flow in the opposite direction is able to be switched on and off by the other of the two semiconductor switches.

4. Multilevel converter according to Claim 3,
**characterized in that**
the semiconductor switches of the bidirectionally switchable switching device (200) each comprise a freewheeling diode (D) and the anode terminals or the cathode terminals of the freewheeling diodes (D) of the two semiconductor switches are electrically connected to one another.

5. Multilevel converter according to one of Claims 2 to 4,
**characterized in that**
the first and second switching unit (310, 320) of the series circuit unit (300) each comprise two semiconductor switches (311, 312, 321, 322) that are electrically connected in series.

6. Multilevel converter according to Claim 5,
**characterized in that**
- the semiconductor switches (311, 312, 321, 322) of the series circuit unit (300) each comprise a freewheeling diode (D) and
- the freewheeling diodes (D) are each electrically arranged such that their cathode terminal is indirectly or directly electrically connected to the first terminal (301) of the series circuit unit (300) and their anode terminal is indirectly or directly electrically connected to the second terminal (302) of the series circuit unit (300) and the freewheeling diodes (D) form a freewheeling path (330) that allows a current flow from the second terminal (302) of the series circuit unit (300) in the direction of the first terminal (301) of the series circuit unit (300).

7. Multilevel converter according to one of Claims 2 to 6,
**characterized in that**
- the semiconductor switches of the half-bridge (100) each comprise a freewheeling diode (D) and
- the freewheeling diodes (D) of the half-bridge (100) are each electrically arranged such that their cathode terminal is indirectly or directly electrically connected to the first half-bridge output terminal (101) and thus the first terminal (301) of the series circuit unit (300) and their anode terminal is indirectly or directly electrically connected to the second half-bridge output terminal (102) and thus the second terminal (302) of the series circuit unit (300) and the freewheeling diodes (D) of the half-bridge (100) form a freewheeling path (130) that allows a current flow from the second terminal (302) of the series circuit unit (300) in the direction of the first terminal (301) of the series circuit unit (300) and is electrically in parallel with the freewheeling path (330) formed by the freewheeling diodes (D) of the semiconductor switches of the series circuit unit (300).

8. Multilevel converter according to one of Claims 2 to 7,
**characterized in that**
the semiconductor switches of the half-bridge (100), of the series circuit unit (300) and of the bidirectionally switchable switching device (200) each comprise a transistor (TR) and a freewheeling diode (D) connected in parallel therewith.

9. Multilevel converter according to one of Claims 2 to 8,
**characterized in that**
the semiconductor switches of the half-bridge (100), of the series circuit unit (300) and of the bidirectionally switchable switching device (200) are structurally identical.

10. Multilevel converter according to one of Claims 2 to 9,
**characterized in that**
the semiconductor switches of the half-bridge (100), of the series circuit unit (300) and of the bidirectionally switchable switching device (200) are bipolar transistors having an integrated gate electrode.

11. Multilevel converter according to one of Claims 2 to 10,
**characterized in that**
all of the submodules (T) of all of the submodule series circuits of the multilevel converter have the features according to one of Claims 1 to 11.

## Revendications

1. Sous-module (T) d'un convertisseur modulaire à niveaux multiples, comportant
- un demi-pont (100), qui forme une borne (Et) d'entrée du sous-module (T) et qui comprend une première et une deuxième bornes (101, 102) de sortie du demi-pont, et
- une unité (300) de circuit série, qui est connectée, par une première borne (301), à la première borne (101) de sortie du demi-pont et, par une deuxième borne (302), à la deuxième borne (102) de sortie du demi-pont, l'unité (300) de circuit série comprenant une première et une deuxième unités (310, 320) de coupure, ainsi qu'un condensateur (C2) et le point (V300) de liaison électrique, entre les deux unités (310, 320) de coupure de l'unité (300) de circuit série, formant une borne (At) de sortie du sous-module (T),
**caractérisé par**
- un dispositif (200) de coupure apte à la coupure bidirectionnelle, qui peut laisser passer le courant et l'arrêter en fonction du sens de passage du courant et qui est connecté par une borne (A200) à la borne (At) de sortie du sous-module (T) et par une autre borne (E200) à la deuxième borne (102) de sortie du demi-pont et ainsi à la deuxième borne (302) de l'unité (300) de circuit série,
- dans lequel le demi-pont (100) comprend un circuit série ayant deux interrupteurs (110, 120) à semi-conducteur montés en série, dont le point (V100) de liaison électrique forme la borne (Et) d'entrée du sous-module (T), et un condensateur (C1), qui est monté en parallèle au circuit série et dont les bornes extérieures forment la première et la deuxième bornes (101, 102) de sortie du demi-pont (100),
- l'une des deux bornes du condensateur (C2) de l'unité (300) de circuit série forme la deuxième borne (302) de l'unité (300) de circuit série et est connectée à l'une des deux bornes du condensateur (C1) du demi-pont (100) et les deux condensateurs (C1, C2) et les unités (310, 320) de coupure de l'unité (300) de circuit série forment électriquement une boucle, et
- le dispositif (200) de coupure apte à la coupure bidirectionnelle est connecté par son autre borne (E200) au point de liaison électrique entre le condensateur (C1) du demi-pont (100) et le condensateur (C2) de l'unité (300) de circuit série.

2. Convertisseur (10) modulaire à niveaux multiples, comprenant au moins un circuit (UE) série de sous-module, qui comprend au moins deux sous-modules (T) montés en série et une inductance (L),
**caractérisé en ce qu'**
au moins l'un des sous-modules (T) est un sous-module suivant la revendication 1.

3. Convertisseur à niveaux multiples suivant la revendication 2,
**caractérisé en ce que**
- le dispositif (200) de coupure apte à la coupure bidirectionnelle comprend deux interrupteurs (210, 220) à semi-conducteur, qui sont montés en série électriquement et qui sont aptes à la coupure unidirectionnelle et qui peuvent laisser passer le courant et l'arrêter, respectivement, seulement dans un sens de passage du courant, et
- les interrupteurs (210, 220) à semi-conducteur du dispositif (200) de coupure sont polarisés en inverse, de manière à pouvoir faire passer et arrêter un flux de courant dans un sens, à partir de l'un des deux interrupteurs à semi-conducteur, et à pouvoir faire passer et arrêter un flux de courant dans le sens contraire, à partir de l'autre des deux interrupteurs à semi-conducteur.

4. Convertisseur à niveaux multiples suivant la revendication 3,
**caractérisé en ce que**
les interrupteurs à semi-conducteur du dispositif (200) de coupure apte à la coupure bidirectionnelle comprennent chacun une diode (D) de roue libre et les bornes d'anode ou les bornes de cathode des diodes (D) à roue libre des deux interrupteurs à semi-conducteur sont connectées l'une à l'autre électriquement.

5. Convertisseur à niveaux multiples suivant l'une des revendications 2 à 4,
**caractérisé en ce que**
la première et la deuxième unité (310, 320) de coupure de l'unité (300) de circuit série comprennent chacune deux interrupteurs (311, 312, 321, 322) à semi-conducteur, qui sont montés en série électriquement.

6. Convertisseur à niveaux multiples suivant la revendication 5,
**caractérisé en ce que**
- les interrupteurs (311, 312, 321, 322) à semi-conducteur de l'unité (300) de circuit série comprennent chacun une diode (D) de roue libre et
- les diodes (D) de roue libre sont montées chacune électriquement de manière à ce que sa borne de cathode soit en liaison indirectement ou directement électriquement avec la première borne (301) de l'unité (300) de circuit série et de manière à ce que sa borne d'anode soit en liaison indirectement ou directement électriquement avec la deuxième borne (302) de l'unité (300) de circuit série et de manière à ce que les diodes (D) de roue libre forment un trajet (330) de roue libre, qui autorise un flux de courant de la deuxième borne (302) de l'unité (300) de circuit série en direction de la première borne (310) de l'unité (300) de circuit série.

7. Convertisseur à niveaux multiples suivant l'une des revendications 2 à 6,
**caractérisé en ce que**
- les interrupteurs à semi-conducteur du demi-pont (100) comprennent chacun une diode (D) de roue libre et
- les diodes (D) de roue libre du demi-pont (100) sont montées chacune électriquement de manière à ce que leur borne de cathode soit en liaison indirectement ou directement électriquement avec la première borne (101) de sortie du demi-pont et ainsi avec la première borne (301) de l'unité (300) de circuit série et de manière à ce que leur borne d'anode soit en liaison indirectement ou directement électriquement avec la deuxième borne (102) de sortie du demi-pont et ainsi avec la deuxième borne (302) de l'unité (300) de circuit série et de manière à ce que les diodes (D) de roue libre du demi-pont (100) forment un trajet (130) de roue libre, qui autorise un flux de courant de la deuxième borne (302) de l'unité (300) de circuit série en direction de la première borne (301) de l'unité (300) de circuit série, et soient électriquement en parallèle avec le trajet (330) de roue libre, que forment les diodes (D) de roue libre des interrupteurs à semi-conducteur de l'unité (300) de circuit série.

8. Convertisseur à niveaux multiples suivant l'une des revendications 2 à 7,
**caractérisé en ce que**
les interrupteurs à semi-conducteur du demi-pont (100) de l'unité (300) de circuit série et du dispositif (200) de coupure apte à la coupure bidirectionnelle comprennent chacun un transistor (TR) et une diode (D) de roue libre, qui y est montée en parallèle.

9. Convertisseur à niveaux multiples suivant l'une des revendications 2 à 8,
**caractérisé en ce que**
les interrupteurs à semi-conducteur du demi-pont (100), l'unité (300) de circuit série et le dispositif (200) de coupure apte à la coupure bidirectionnelle sont de construction pareille.

10. Convertisseur à niveaux multiples suivant l'une des revendications 2 à 9,
**caractérisé en ce que**
les interrupteurs à semi-conducteur du demi-pont (100), l'unité (300) de circuit série et le dispositif (200) de coupure apte à la coupure bidirectionnelle sont des transistors bipolaires à électrode de grille intégrée.

11. Convertisseur à niveaux multiples suivant l'une des revendications 2 à 10,
**caractérisé en ce que**
tous les sous-modules (T) de tous les circuits série de sous-modules du convertisseur à niveaux multiples ont les caractéristiques suivant l'une des revendications 1 à 10.
